# EUROPEAN PATENT SPECIFICATION

(11) **EP 2 868 848 B1**
(45) Date of publication and mention of the grant of the patent: **25.01.2017**
(21) Application number: 14191263.4
(22) Date of filing: 31.10.2014
(51) Int. Cl.: E05B 47/02, E05B 47/00, F16P 3/08, H02J 7/34

(54) **Power management module for a solenoid-driven safety lock**
Leistungsverwaltungsmodul für ein elektromagnetisch angetriebenes Sicherheitsschloss
Module de gestion de puissance pour serrure de sécurité à commande solénoïde

(30) Priority: 31.10.2013 US 201314068316
(43) Date of publication of application: 06.05.2015
(73) Proprietor: Rockwell Automation Technologies, Inc., Mayfield Heights, OH 44124 (US)
(72) Inventor: Burdenko, Michael, Wellesley Hills, MA 02481 (US); Nair, Suresh, Amherst, NH 03031 (US); Jones, Derek W., Kirkcudbright, Dumfries & Galloway DG6 4SP (GB)
(74) Representative: Grünecker Patent- und Rechtsanwälte PartG mbB

(56) References cited:
- WO-A2-2005/041385
- US-A- 3 953 991
- US-A- 5 781 399
- US-A- 5 941 106

## Description

### TECHNICAL FIELD

The claimed subject matter relates generally to safety locking mechanisms, and in particular to solenoid-driven safety locks having integrated power management modules that reduce energy consumption, shield the supply line from high in-rush currents, and improve reliability of the safety lock.

### BACKGROUND

Modern industrial facilities often include a number of hazardous areas that should only be accessed when certain safe conditions within the areas are met. These can include areas in which potentially dangerous automated machinery is running. Such areas are typically enclosed within protective structures (e.g., safety cages) having one or more lockable access doors or gates. To ensure that these access doors cannot be opened during unsafe operating conditions, many access doors incorporate electrically actuated locking mechanisms that can be either manually or automatically engaged. Solenoid-driven safety locks represent one example of such a controllable door lock. These solenoid-driven locks may comprise a locking mechanism (often mounted on the door frame) having a linearly or rotationally actuating plunger or armature that either advances or retracts when an associated solenoid is energized, and a receptacle (mounted on the door itself) having an opening that receives the plunger when advanced, thereby locking the door or gate.

Industrial safety systems that incorporate electrically actuated safety locks such as those described above are often designed to be low power systems, comprising one or more low-voltage power supplies (e.g., 24VDC) and devices designed to operate at such low powers. However, there may be circumstances in which a system designer wishes to drive a safety lock using a greater amount of power than is available on the safety power circuit. In this regard, increasing the stroking force of the locking plunger can improve safety and reliability of the lock, since extending the plunger with greater force can reduce the possibility of latching failures due to misalignment between the plunger and the receptacle. Given such safety configurations, system designers may wish to violate the power specifications of the safety circuit by providing a greater amount of actuation power to the safety lock. This generally requires an additional transformer or power supply capable of providing the desired power level to the safety lock.

There are also other power-related concerns associated with operation of solenoid-driven safety locks. For example, sudden energy pulses delivered to the safety lock's solenoid to actuate the plunger may cause high in-rush currents on the lock's power supply line. Such high current fluctuations may increase the risk of overloading the power supply, particularly if multiple safety locks are actuated at substantially the same time. In addition, loss of power to the safety lock can prevent actuation of the safety lock due to lack available power to the solenoid. Consequently, if the solenoid-driven plunger is in the locked (extended) position when power is lost (or if the safety lock is configured to extend the plunger when power is removed from the solenoid), the operator has no means for retracting the plunger in order to gain entrance to the protected area if necessary.

The above-described deficiencies of today's solenoid-driven safety locks are merely intended to provide an overview of some of the problems of conventional systems, and are not intended to be exhaustive. Other problems with conventional systems and corresponding benefits of the various non-limiting embodiments described herein may become further apparent upon review of the following description.

US 5,781,399 relates to an energy efficient control circuit for solenoid actuated locking device. A solenoid actuated locking device is provided in which a lock actuation member is coupled with a solenoid. The solenoid is adapted to move the lock actuation member between a locked state and an unlocked state. Energy is supplied to the solenoid by a solenoid driver circuit coupled to the solenoid and to an energy storage circuit. A power supply couples a source of electrical energy to capacitors energy storage circuit.

It is the object of the present invention to provide a more energy efficient system and method for a solenoid driven safety lock.

This object is solved by the subject matter of the independent claims.

Preferred embodiments are defined by the dependent claims.

### SUMMARY

The following presents a simplified summary in order to provide a basic understanding of some aspects described herein. This summary is not an extensive overview nor is intended to identify key/critical elements or to delineate the scope of the various aspects described herein. Its sole purpose is to present some concepts in a simplified form as a prelude to the more detailed description that is presented later.

One or more embodiments of the present disclosure relate to a solenoid-driven safety lock that incudes an integrated power management module. The power management module can implement a number of features that facilitate reliable and energy-efficient operation of the safety lock. For example, some embodiments of the power management module can protect the power supply line that feeds power to the solenoid from sudden in-rush currents caused by electrical pulses delivered to the solenoid. The power management module can also be configured to deliver electrical pulses to the solenoid at a higher voltage than the rated voltage of the supply line, allowing the safety lock to be actuated with a greater force than would be possible using the lower supply line voltage. Moreover, one or more embodiments of the power management module can store electrical energy within the safety lock. This stored energy can be used to operate the safety lock in the absence of power on the supply line.

To these and other ends, the power management module can comprise an on-board bank of capacitors and associated control components that regulate delivery of electrical pulses from the capacitors to the solenoid. The capacitors can be charged by the supply line that delivers power to the safety lock, and a discharge switch component can control discharge of the capacitors to the safety lock solenoid to facilitate actuation of the plunger. According to this configuration, the capacitor bank essentially replaces the power supply line as the main source of power to the solenoid. Since the electrical pulse is delivered to the solenoid by a bank of capacitors residing between the supply line and the solenoid - rather than being delivered directly from the supply line itself-the supply line is protected from high current fluctuations associated with actuation of the safety lock.

In addition, the capacitor bank can be sized such that the electrical pulses are delivered at a higher power than would be possible if the pulses were fed directly by the supply line, thereby increasing the force with which the plunger is extended and retracted. Moreover, control components included in the power management module can keep the duration of the electrical pulses near the minimum duration required to actuate the plunger, thereby substantially minimizing energy consumption. For example, position sensors can detect when the plunger is fully extended or retracted and provide feedback signaling to an on-board controller that curtails discharge of the capacitors when the plunger is confirmed to be at the desired position. In another example, the power management module can be configured to deliver electrical pulses to the solenoid for a defined period of time each time a command to actuate the lock is received, where the defined period of time is shorter than the time required to fully discharge the capacitors. This can allow the capacitors to recharge more quickly after the plunger has been extended or retracted, using less power than would be required to fully recharge the capacitors from the fully discharged state.

To the accomplishment of the foregoing and related ends, certain illustrative aspects are described herein in connection with the following description and the annexed drawings. These aspects are indicative of various ways which can be practiced, all of which are intended to be covered herein. Other advantages and novel features may become apparent from the following detailed description when considered in conjunction with the drawings.

### BRIEF DESCRIPTION OF THE DRAWINGS

FIG. 1 is a cross-sectional representative of an example solenoid driven safety lock in an unlocked state.
FIG. 2 is a cross-sectional representative of an example solenoid driven safety lock in a locked state.
FIG. 3 illustrates an example solenoid-driven safety lock with an integrated power management module (unlocked).
FIG. 4 illustrates an example solenoid-driven safety lock with an integrated power management module (locked).
FIG. 5 is a block diagram of an example power management module.
FIG. 6 is a cross-sectional representation of a safety lock that includes a power management module and position detection sensors (unlocked).
FIG. 7 is a cross-sectional representation of a safety lock that includes a power management module and position detection sensors (locked).
FIG. 8 illustrates an example power management module that regulates discharge time using a discharge timer.
FIG. 9 is a flowchart of an example methodology for actuating a solenoid-driven safety lock using a power management module.
FIG. 10 is a flowchart of an example methodology for enforcing a desired default position for a bi-stable solenoid-driven safety lock in response to a power outage.
FIG. 11 is a flowchart of an example methodology for controlling an amount of energy used to actuate a locking mechanism of a bi-stable solenoid-driven safety lock using position indications.
FIG. 12 is a flowchart of an exemplary methodology for controlling an amount of energy used to actuate a locking mechanism of a bi-stable solenoid-driven safety lock using a pre-set timer.
FIG. 13 is an example computing environment.
FIG. 14 is an example networking environment.

### DETAILED DESCRIPTION

The present invention is now described with reference to the drawings, wherein like reference numerals are used to refer to like elements throughout. In the following description, for purposes of explanation, numerous specific details are set forth in order to provide a thorough understanding of the present invention. It may be evident, however, that the present invention may be practiced without these specific details. In other instances, well-known structures and devices are shown in block diagram form in order to facilitate describing the present invention.

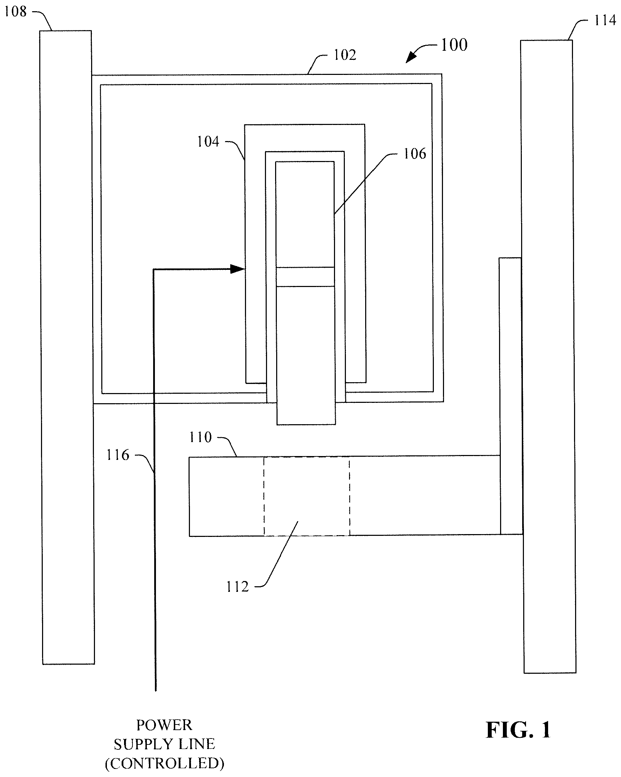

FIG. 1 depicts a cross-sectional view of an example solenoid driven safety lock 100 mounted to a first surface 108. First surface 108 can comprise, for example, a door frame, a mounting bracket, a sliding or hinged safety gate, or other such surface. Safety lock 100 comprises a number of electrical and mechanical components disposed within a housing 102 made of a suitable material (*e.g*., metal, plastic, fiberglass, or other such materials). A solenoid assembly comprising a solenoid 104 and a plunger 106 (also referred to as an armature) is disposed within the housing 102.

To facilitate movement of plunger 106, a power supply line 116 delivers power to solenoid 104 in a controlled manner. Power supply line 116 applies a voltage (*e.g.*, 24VDC) to solenoid 104, creating a current in the solenoid coil that generates a magnetic field. Depending on the polarity of the applied voltage (which controls the direction of the current through the solenoid coil), the magnetic field causes plunger 106 to either extend or retract. Accordingly, power delivered to the solenoid via power supply line 116 is generally controlled through system circuitry (*e.g.,* a manual control switch, a controller, a safety circuit, *etc*.) so that the safety lock 100 can be locked and unlocked as needed.

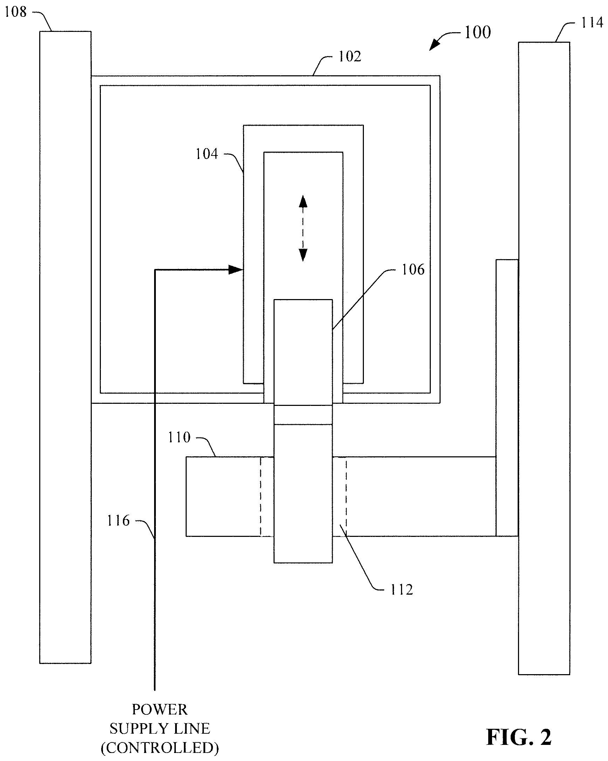

Typically, safety lock 100 is used in conjunction with a receptacle component 110, which mounts to a second surface 114 that is complementary to the first surface 108. For example, if first surface 108 is a stationary frame of a door or a safety gate, second surface 114 may be the movable door or safety gate itself. In this example, safety lock 100 and receptacle component 110 are mounted such that, when the door or safety gate is in the closed position, plunger 106 of safety lock 100 is in alignment with a receptacle hole 112 of receptacle component 110. Extending plunger 106 while in this aligned position causes the plunger 106 to engage with the receptacle hole 112, as illustrated in FIG. 2.

Various types of solenoid-driven safety locks are available, where the type of the safety lock determines how the plunger 106 responds to power applied to the solenoid 104. For example, some solenoid-driven safety locks include solenoid assemblies that require power to be constantly applied in order to hold the plunger in a given position. Such solenoid assemblies may be designed as "fail open" type assemblies, whereby the plunger 106 is advanced while solenoid 104 is energized, and returns to the retracted position within housing 102 when the solenoid is de-energized (*e.g.,* by virtue of a spring mechanism that retracts the plunger 106 in the absence of a magnetic field). Other solenoid assemblies of this type may comprise "fail closed" type assemblies, wherein the plunger 106 is retracted when solenoid 104 is energized and advanced when energy is removed.

Other types of safety locks utilize bi-stable solenoid assemblies (also referred to as magnetic latching solenoid assemblies), which only require power to be applied to the solenoid 104 while the plunger 106 is transitioning between the extended and retracted positions. Bi-stable solenoid assemblies may include one or more permanent magnets that magnetically latch plunger 106 in either the extended or retracted position without the need to continually apply electrical current to the solenoid 104. To transition the plunger 106 - *e.g.*, from the retracted position to the extended position - a voltage pulse is applied to solenoid 104 at the appropriate polarity, placing a current on the solenoid that establishes a momentary magnetic field of sufficient force to overcome the magnetic pull of the permanent magnet that holds the plunger 106 in the retracted position. This causes the plunger 106 to escape the magnetic attraction of the permanent magnet and transition to the extended position. The plunger 106 remains latched in the extended position after the voltage is removed from the solenoid 104. Some bi-stable solenoids employ a single permanent magnet that facilitates latching the plunger in both the extended and retracted position. Other types of bi-stable solenoids may employ a second permanent magnet that locks the plunger 106 in the extended position, or a spring that holds the plunger in the extended position. Because of the magnetic and/or spring latching, bi-stable solenoids preserve their current plunger position even in the event of power loss.

While bi-stable solenoids consume less energy than solenoids that require constant application of energy to maintain the plunger 106 in a given position, there are nevertheless limitations and inefficiencies associated with bi-stable solenoid-driven safety locks. For one, the voltage pulses applied to solenoid 104 often result in sudden high in-rush currents which may overload the power supply line 116, particularly if multiple safety locks on the same power circuit are actuated at roughly the same time. Moreover, the force with which the plunger 106 is actuated is limited by the voltage level of the power circuit (which determines the amount of current driven through the solenoid coil). Since industrial safety systems are often designed as low power systems (*e.g*., 24VDC), the force with which the plunger is advanced to the extended position may not be sufficient to ensure reliable engagement with the receptacle hole 112, particularly in scenarios in which the receptacle hole 112 is not accurately aligned with plunger 106. Also, although voltage is applied to the bi-stable solenoid for only a short duration to facilitate actuation of the plunger 106, the voltage pulses may nevertheless be of longer duration than is necessary for actuation of the plunger 106, needlessly wasting energy. Furthermore, in the event that supply power is lost, an operator has no means for actuating the safety lock if necessary (*e.g*., if a door or safety gate must be unlocked during a power outage to gain access to a protected area), since actuation of the plunger 106 requires power to be applied to the solenoid 104.

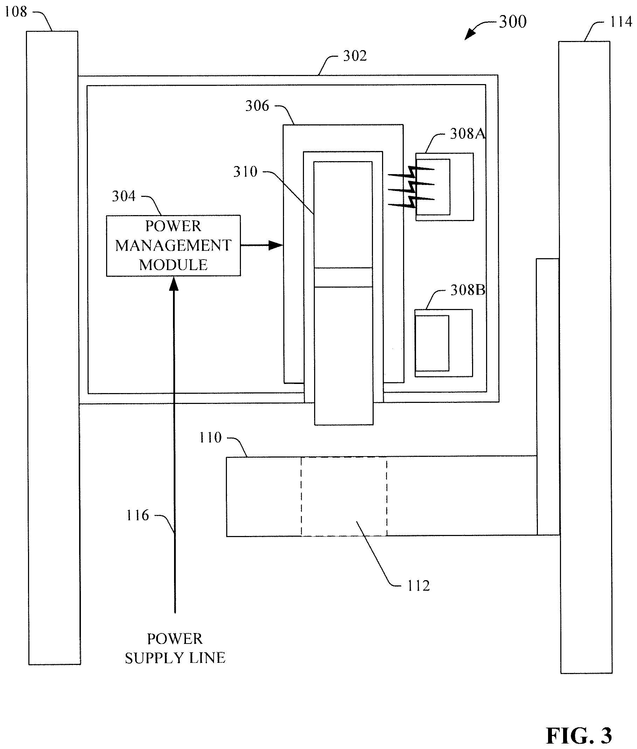

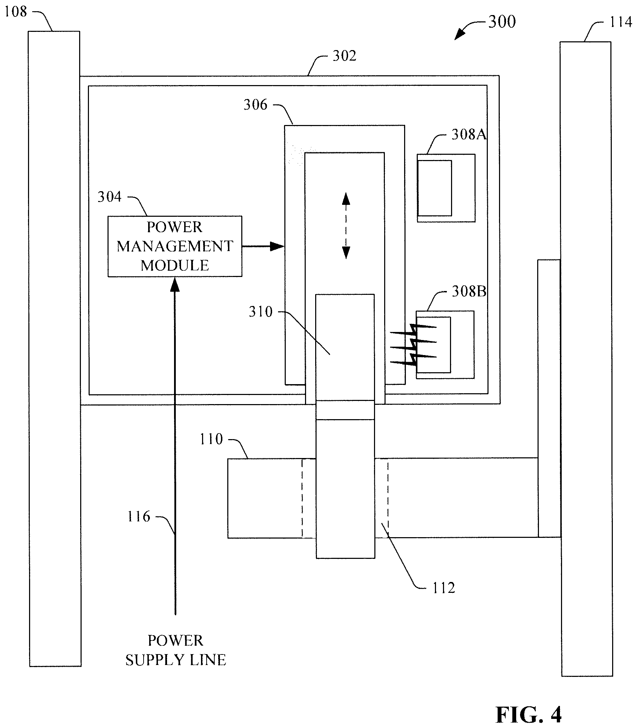

To address these and other issues, one or more embodiments of the solenoid-driven safety lock described herein include an integrated power management module that facilitates energy efficiency and control flexibility. FIG. 3 illustrates an example solenoid-driven safety lock 300 with an integrated power management module 304. Safety lock 300 includes a bi-stable solenoid assembly comprising solenoid 306, plunger 310, and permanent magnets 308A and 308B. Permanent magnets 308A and 308B serve as latching magnets for plunger 310. While plunger 310 is in the retracted position as depicted in FIG. 3, permanent magnet 308A magnetically latches plunger 310 in the retracted position without the need to maintain power on solenoid 306. To actuate plunger 310 to the extended position, a voltage of appropriate polarity is applied to solenoid 306, generating a magnetic field that creates sufficient force on the plunger 310 to overcome the magnetic attraction of permanent magnet 308A, allowing the plunger 310 to advance to the extended position, as illustrated in FIG. 4. Permanent magnet 308B magnetically latches plunger 310 in this extended position, allowing power to be removed from solenoid 306. Plunger 310 will remain in the extended position until a voltage of opposite polarity relative to that used to extend the plunger is applied to solenoid 306. When such a voltage is applied, a magnetic field is generated that applies sufficient upward force on the plunger 310 to overcome the magnetic latching of permanent magnet 308B, allowing the plunger 310 to return to the retracted position. By virtue of this bi-stable configuration, electrical energy is only required to be applied to solenoid 306 during transition of plunger 310 between the extended and retracted positions.

Although FIGs. 3 and 4 depict safety lock 300 as including two permanent magnets 308A and 308B for latching plunger 310 in the retracted and extended positions, respectively, some embodiments of safety lock 300 may only include one latching magnet. In such embodiments, the solenoid assembly may include a spring that applies a force on plunger 310 in one direction (*e.g*., the extended direction). When a voltage of appropriate polarity is applied to solenoid 306, the solenoid establishes a magnetic field that applies sufficient retracting force on plunger 310 to overcome the spring loading, thereby retracting the plunger 310 into housing 302. The single permanent magnet then latches the plunger 310 in the retracted position, allowing the voltage to be removed from solenoid 306. To extend the plunger 310, a voltage of opposite polarity relative to that used to retract the plunger is applied to solenoid 306, creating a magnetic field that applies sufficient extending force on the plunger 310 to overcome the magnetic latching of the permanent magnet. While extended, the internal spring maintains plunger 310 in the extended position until a retracting voltage is applied.

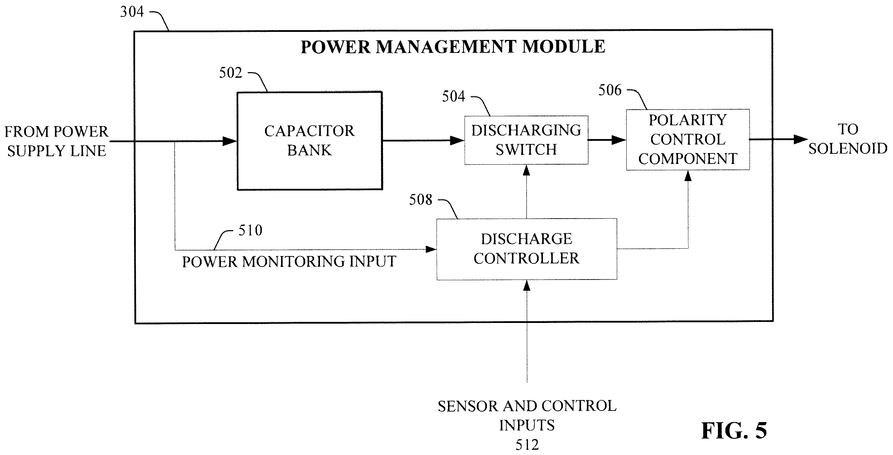

In the examples depicted in FIG. 3 and 4, rather than providing power to solenoid 306 via a direct electrical connection to power supply line 116, the power supply line 116 is electrically connected to a power management module 304, which controls delivery of energy pulses to solenoid 306. FIG. 5 is a block diagram of an example power management module 304. Power management module 304 comprises a capacitor bank 502, a discharging switch 504, a polarity control component 506, and a discharge controller 508. Capacitor bank 502 comprises a set of parallel capacitors that can be electrically connected to power supply line 116, which facilitates charging of the capacitors. Capacitor bank 502 thus stores electrical energy from the supply line, which can subsequently be discharged to the solenoid in response to commands to lock or unlock the safety lock. In some embodiments, capacitor bank 502 can comprise one or more resistors as well as the bank of capacitors to yield an RC circuit that can be designed to produce an energy efficient discharge curve suitable for reliably actuating the safety lock plunger while substantially minimizing energy consumption, as will be discussed in more detail below. In this way, capacitor bank 502 replaces the main power supply line 116 as the primary source of power delivered to the solenoid.

Discharging switch 504 is disposed at the output of the capacitor bank 502 to control discharging of the stored energy to the solenoid. Discharging switch 504 can comprise any suitable component able to be switched between a first state that electrically isolates the capacitor bank 502 from the solenoid and a second state that electrical connects the capacitor bank 502 to the solenoid (*e.g*., a mechanical contactor, a solid-state switch, *etc.*)*.* Discharge controller 508 controls the state of discharging switch 504 based on sensor and/or control inputs 512, as will be explained in more detail below. Discharge controller 508 also controls polarity control component 506, which determines the polarity of the energy pulse delivered to the solenoid when the capacitor bank 502 is discharged. According to one or more embodiments, polarity control component 506 can set the polarity of the energy pulse by controlling which end of the solenoid coil wire is connected to the positive power line of the energy pulse, thereby controlling the direction of current through the solenoid in response to the energy pulse.

For example, if discharge controller 508 receives a command to unlock the safety lock (by retracting the plunger), discharge controller 508 sets the polarity control component 506 to a first state corresponding to a first polarity configured to create a retracting magnetic field, and instructs the discharging switch 504 to close, thereby passing the energy stored in the capacitor bank 502 to the polarity control component 506. The polarity control component 506 passes the energy pulse to the solenoid such that the direction of the current through the solenoid coil is in the direction that causes the plunger 310 to retract. Discharge controller 508 then instructs the discharging switch 504 to open, isolating the output of capacitor bank 502 from the solenoid 306 and allowing the capacitor bank 502 to recharge. Subsequently, when discharge controller 508 receives a command to lock the safety gate by extending the plunger 310, discharge controller 508 sets polarity control component 506 to a second state corresponding to a second polarity that is opposite the first polarity. The discharge controller 508 then instructs the discharging switch 504 to close, passing the energy stored in capacitor bank 502 to the polarity control component 506, which sends the energy pulse to the solenoid 306 such that the direction of current through the solenoid is in the direction that causes plunger 310 to extend. Discharge controller 508 then instructs discharging switch 504 to open, again isolating the output of capacitor bank 502 from solenoid 306 and allowing capacitor bank 502 to recharge.

Power management module 304 provides a number of benefits relating to power consumption and operation of the safety lock 300. For one, the capacitor bank 502 protects power supply line 116 (and thus the power supply that feeds the safety system) from high in-rush currents associated with actuation of the plunger 310. The electrical pulses needed to actuate the plunger 310 are provided by energy stored in capacitor bank 502 rather than being provided directly from power supply line 116. Consequently, the power supply line 116 is only responsible for recharging the capacitor bank 502 after discharge. Since recharging the capacitor bank 502 places a lower and more gradual demand on the power supply compared to the sudden in-rush currents caused by the electrical pulses delivered to the solenoid, the power supply is shielded from the high current fluctuations during activation of the solenoid.

Moreover, some embodiments of the power management module 304 may include a voltage increasing component configured to increase the voltage of the electrical pulses from the capacitor bank relative to the voltage of the power supply line 116. Delivering the energy pulses to the solenoid at this higher voltage generates a higher current through the solenoid than would be possible by a direct connection between the solenoid and the power supply line. Actuating the solenoid 306 at this higher current causes plunger 310 to extend and retract with greater actuating force, improving reliability of the safety lock 300. In this way, power management module 304 can increase the actuating force of the safety lock 300 without placing additional power requirements on the system power supply.

Also, since capacitor bank 502 remains charged after power is removed from power supply line 116, power management module 304 is able to deliver power to solenoid 306 even in the absence of power on supply line 116. For example, if safety lock 300 is in the locked position when supply line power is lost, an operator may still initiate an unlock command that discharges the capacitor bank 502 to the solenoid, causing the plunger 310 to retract to the unlock position.

In a related aspect, some embodiments of power management module 304 can also be configured to enforce a default position of plunger 310 in the event of a power loss. For example, a system engineer may decide that safety lock 300 should default to the unlocked state in the event of a power loss to ensure that maintenance personnel can access a protected area (since the protected area is deemed to be safe in the absence of power, and maintenance personnel may require access during the power outage). Accordingly, discharge controller 508 may include a configuration setting that allows a user to set the default position of the plunger (either extended or retracted).

During subsequent operation, discharge controller 508 can monitor the state of power supply line 116 via power monitoring input 510 to determine when the supply line 116 transitions from a power ON state to a power OFF state. In response to a determination that the power supply line 116 has transitioned to a power OFF state, indicating that safety system power has been lost, discharge controller 508 can compare the current position of the plunger 310 with the desired default position indicated by the configuration setting. If the current position of the plunger 310 matches the configured default position, no further action is taken (*e.g.*, the capacitor bank is 502 is not discharged). Alternatively, if the current position of the plunger 310 does not match the configured default position (*e.g*., plunger 310 is extended, but the configured default position is the retracted position), discharge controller 508 sets the polarity control component 506 to the polarity associated with retraction of the plunger, and instructs the discharging switch 504 to discharging the capacitor bank 502 to the solenoid, causing the plunger 310 to retract.

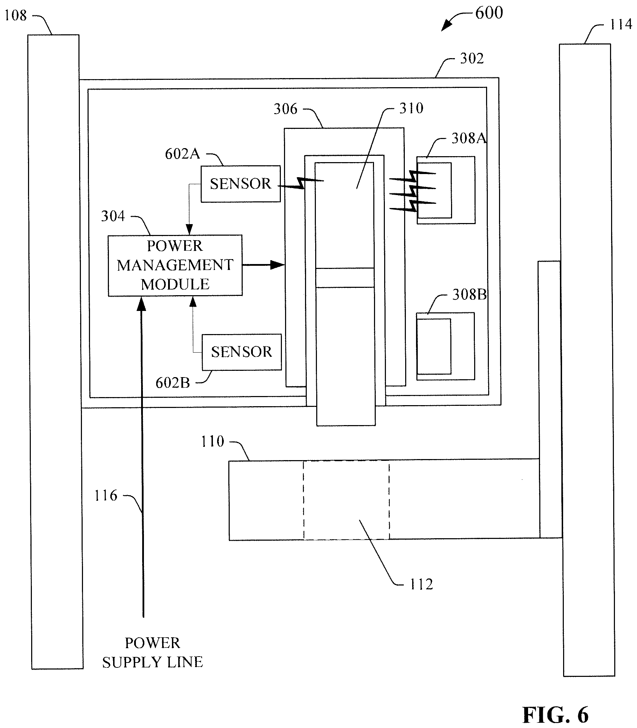

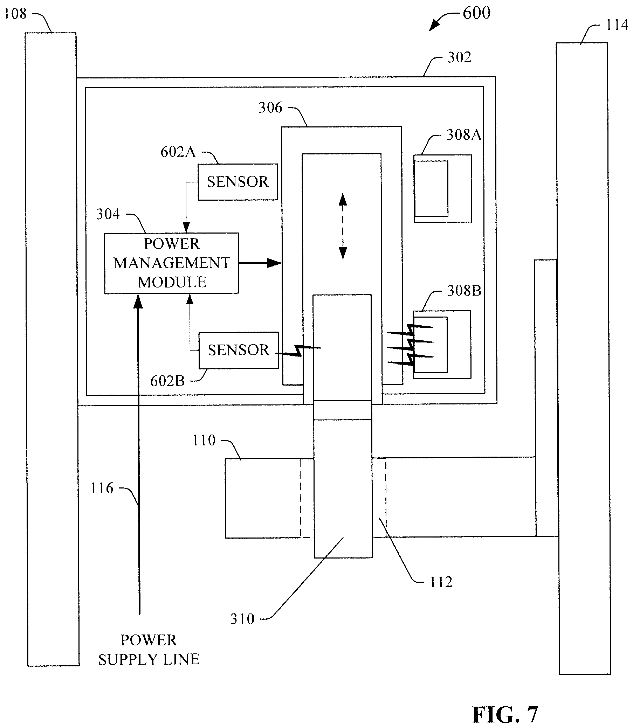

In the example described above, the current position of plunger 310 can be determined using position detection sensors (*e.g*., proximity sensors or the like) disposed inside the safety lock housing 302, or mounted outside the housing. FIG. 6 illustrates a cross-sectional view of a safety lock 600 that includes internal position detection sensors. In this example, sensor 602A detects when plunger 310 is in the retracted (unlocked) position and sends an appropriate position detection signal to power management module 304, which passes the signal to discharge controller 508 as one of the sensor and control inputs 512. Similarly, sensor 602B detects when plunger 310 is in the extended (locked) position, and sends an appropriate position detection signal to power management module 304, as illustrated in FIG. 7.

In some embodiments, position sensors 602A and 602B can also be used to further improve energy efficiency of the safety lock by minimizing the discharging time of the capacitor bank 502 during solenoid actuation. In this regard, discharge controller 508 can leverage the position information provided by position sensors 602A and 602B to limit the duration of the capacitor bank discharge pulse such that the pulse duration generally corresponds to the moving time of the plunger (*e.g.,* the minimum pulse duration required to fully actuate the plunger 310 from a first position to a second position).

For example, when power management module 304 receives a command to transition the safety lock from an unlocked state to a locked state (*e.g.,* via sensor and control inputs 512 of FIG. 5), discharge controller 508 will set the polarity control component 506 accordingly and instruct the discharging switch 504 to close, initiating discharge of the capacitor bank 502 to the solenoid, as described in previous examples. The energy pulse from capacitor bank 502 causes solenoid 306 to generate a magnetic field that applies sufficient extending force on plunger 310 to escape the magnetic latching of permanent magnet 308A and begin movement to the extended position. When plunger 310 reaches the fully extended position (as illustrated in FIG. 7), sensor 602A detects that the plunger 310 has reached the fully extended state, and sends a signal to discharge controller 508 confirming that the plunger has fully actuated to the extended position. In response to the signal from sensor 602A, discharge controller 508 instructs discharging switch 504 to open, isolating the capacitor bank 502 from the solenoid 306 and ending the discharge. Permanent magnet 308B latches the plunger 310 in the extended position even when power from the capacitor bank 502 has been removed. Thus, the duration of the discharge is limited to generally match the moving time of the plunger 310, and does not exceed a duration required to fully stroke the plunger to the desired position.

In some embodiments, the capacitors comprising the capacitor bank 502 can be sized sufficiently large such that the discharge time required to fully stroke the plunger from a first position to a second position does not fully discharge the capacitor bank 502. By sizing the capacitor bank 502 in this manner, the supply line 116 is not required to recharge the capacitor bank 502 from a fully discharged state. Instead, the capacitor bank 502 remains partially charged after solenoid actuation is complete, and consequently the supply line 116 is able to recharge the capacitor bank 502 from an already partially charged state. This can further reduce the impact on the system power supply during actuation of the safety lock, as well as reduce the time required to recharge the capacitor bank 502 after actuation.

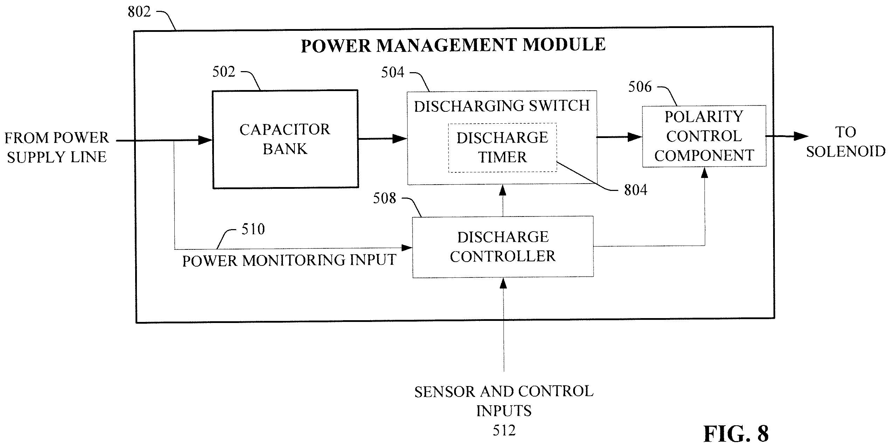

While the examples depicted in FIGs. 6 and 7 illustrate the use of position sensors to control the discharge duration of capacitor bank 502, some embodiments may use other techniques for minimizing discharge time. For example, FIG. 8 illustrates an example power management module 802 according the invention that regulates discharge time using a discharge timer 804. Capacitor bank 502, polarity control component 506, discharging switch 504, and discharge controller 508 generally function as described in previous examples. In this example, when discharge controller 508 instructs discharging switch 504 to discharge capacitor bank 502 to the solenoid, a discharge timer 804 associated with the discharging switch 504 is initiated. Discharging switch 504 is configured to maintain electrical connection between capacitor bank 502 and solenoid 306 until expiration of the discharge timer 804, which occurs after the discharge timer 804 has clocked a predefined duration of time after initiation of the timer. Upon expiration of the discharge timer 804, discharging switch 504 returns to the open state, isolating capacitor bank 502 from the solenoid and ending the discharge.

The time duration of discharge timer 804 can be set to generally correspond to the plunger's duration of travel from one end of its stroke to the other end of the stroke, thereby preventing unnecessary energy discharge after the plunger has reached the end of its stroke. Similar to the example depicted in FIGs. 6 and 7, the capacity of capacitor bank 502 can be set such that the predefined discharge time does not fully discharge the capacitor bank 502, allowing the capacitor bank 502 to be recharged from a partially charged state after actuation of the solenoid 306.

As noted above, one or more embodiments of the power management module 304 can be configured to discharge energy pulses according to a specifically designed discharge curve suitable for actuating the safety lock plunger through its travel from a first end position to a second end position in a manner that is both reliable and energy efficient. In this regard, the capacitor bank 502 can be designed to release its stored energy and generate current on the solenoid in a manner that causes the solenoid 306 to produce a magnetic field having a force distribution over time that substantially matches the forces required to move the plunger 310 through its motion profile from one end position to the other under plunger load conditions. The design of the capacitor bank 502 can be based on a determination of the forces that must be applied to the plunger 310 as a function of the plunger's position to ensure actuation from a first end position (*e.g.,* the retracted position) to the second end position (*e.g.,* the extended position).

For example, during actuation of the plunger 310 from the retracted position to the extended position under plunger load conditions, an initial force must be applied to the plunger in order to overcome the static friction forces that resist the plunger's movement while at rest, as well as the magnetic latching forces of the permanent latching magnet. Once the plunger begins movement, the forces that impede the plunger during intermediate travel are reduced as the plunger travels outside the field of the permanent latching magnet, and the momentum of the plunger overcomes the frictional forces felt by the plunger. As the plunger approaches the extended position, the magnetic forces of the permanent magnet that will latch the plunger in the extended position begin to exert on the plunger, pulling the plunger toward the fully extended position. Consequently, the actuating force that must be applied to the plunger can be decreased toward the end of travel, since the attraction of the permanent latching magnet begins to pull the plunger to its final position.

With this required force distribution identified, the capacitor bank 502 can be designed to discharge its energy pulses according to a suitably controlled discharge curve (the current of the energy pulse as a function of time) that induces a magnetic field in solenoid 306 having a force distribution that substantially matches the forces required to move the plunger through its travel, thereby ensuring reliable actuation of the plunger without expending more energy than is necessary for reliable operation. In one or more embodiments, this can be achieved by designing the RC circuit(s) of the capacitor bank such that the slope of the resulting discharge curve substantially corresponds to the force distribution required to actuate the plunger from a first position to a second position under associated plunger load conditions.

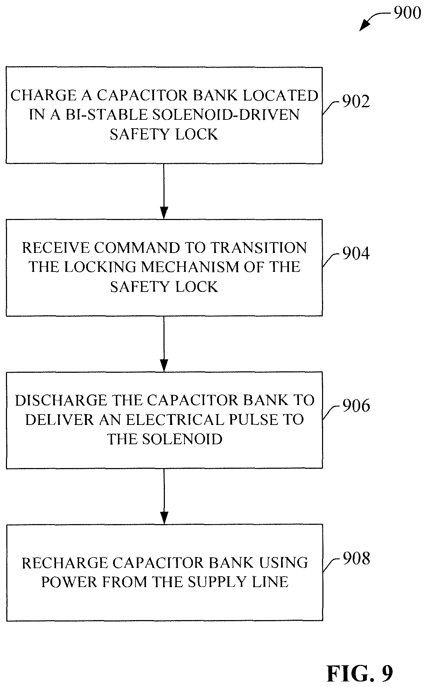

FIG. 9 illustrates an example methodology 900 for actuating a solenoid-driven safety lock using a power management module. Initially, at 902, a capacitor bank disposed in a bi-stable solenoid-driven safety lock is charged. In some scenarios, the capacitor bank can be charged from a power supply line of an industrial safety system. At 904, a command to transition the locking mechanism (e.g., an armature or plunger) of the safety lock is received. For example, the command may instruct the locking mechanism to transition from a retracted (unlocked) position to an extended (locked) position. At 906, the capacitor bank is discharged in response to the command received at step 904, causing an electrical pulse to be delivered to the solenoid of the safety lock. The electrical pulse causes the solenoid-driven locking mechanism of the safety lock to transition to the desired position (extended or retracted). At 908, the capacitor bank is recharged using power on the power supply line.

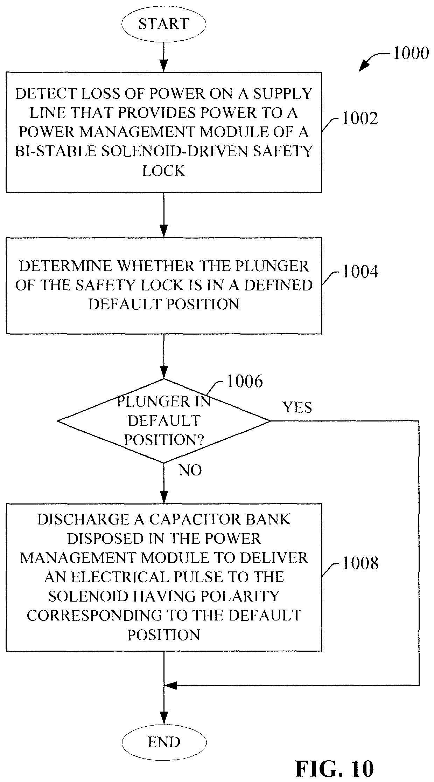

FIG. 10 illustrates an example methodology 1000 for enforcing a desired default position for a bi-stable solenoid-driven safety lock in response to a power outage. Initially, at 1002, a loss of power is detected on a supply line that provides power to a power management module of a bi-stable solenoid-driven safety lock. At 1004, a determination is made regarding whether the plunger of the safety lock is in a defined default position. For example, the safety lock may be configured such that the plunger is to be placed in the retracted (unlocked) position in the event of a power outage. If it is determined that the plunger is in the defined default position (YES at step 1006), no further action is taken and the methodology ends. Alternatively, if it is determined that the plunger is not in the defined default position (NO at step 1006), a capacitor bank of the power management module is instructed to discharge an electrical pulse to the solenoid of the safety lock, where the electrical pulse is set to a polarity that actuates the plunger to the default position.

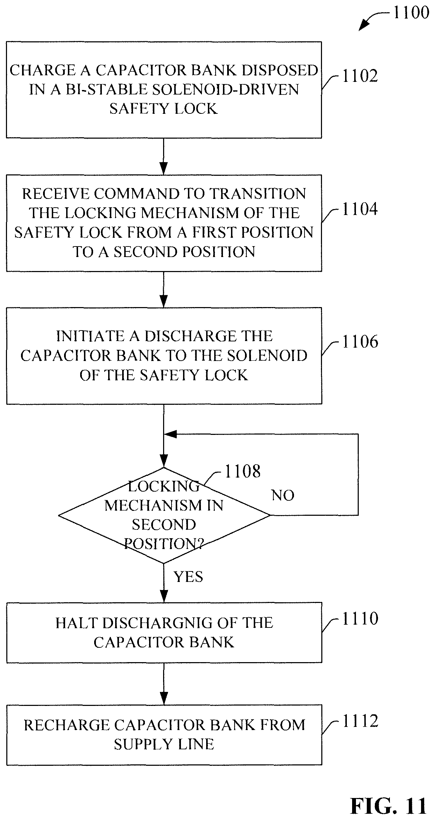

FIG. 11 illustrates an example methodology 1100 for controlling an amount of energy used to actuate a locking mechanism of a bi-stable solenoid-driven safety lock using position indications. Initially, at 1102, a capacitor bank disposed in a bi-stable solenoid-driven safety lock is charged (*e.g*., using power from a power supply line of an industrial safety system). At 1104, a command is received to transition the locking mechanism (*e.g*., armature or plunger) of the safety lock from a first position to a second position. For example, the command may instruct the safety lock to actuate the locking mechanism from the retracted (unlocked) position to the extended (locked) position.

At 1106, in response to the command received at step 1104, a discharge of the capacitor bank is initiated, which causes electrical energy stored in the capacitor bank to be delivered to the solenoid of the safety lock. At 1108, a determination is made regarding whether the locking mechanism has completed travel to the second position. The position of the locking mechanism can be confirmed, for example, using position sensors in the safety lock that detect when the locking mechanism has reached the fully extended or fully retracted position. If the locking mechanism has not completed travel to the second position, (NO at step 1108) the methodology continues monitoring to determine when the locking mechanism has fully actuated to the second position. If it is determined that the locking mechanism has reached the second position (YES at step 1108), discharging of the capacitor bank to the solenoid is halted (*e.g.,* by electrically isolating the capacitor bank from the solenoid) at step 1110. At 1112, the capacitor bank is recharged from the power supply line.

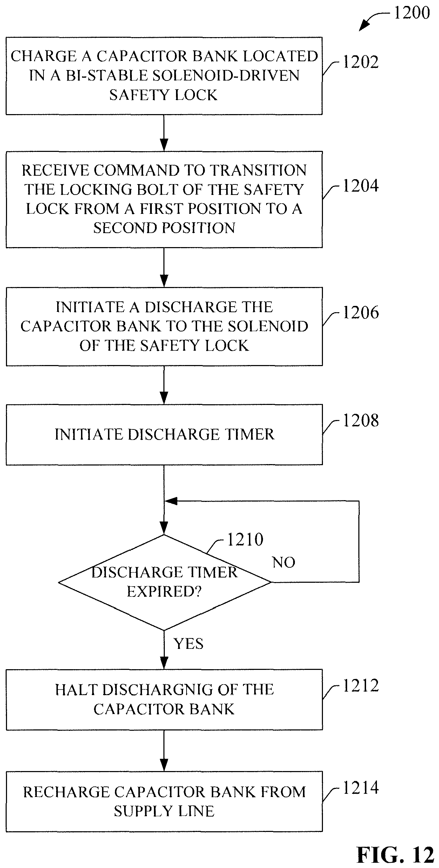

FIG. 12 illustrates an example methodology 1200 according the invention for controlling an amount of energy used to actuate a locking mechanism of a bi-stable solenoid-driven safety lock using a pre-set timer. Initially, at 1202, a capacitor bank disposed in a bi-stable solenoid-driven safety lock is charged (*e.g*., using power for a power supply line of an industrial safety system). At 1204, a command is received to transition the locking mechanism (*e.g*., an armature or plunger) of the safety lock from a first position to a second position. At 1206, in response to the command received at step 1204, a discharge of the capacitor bank is initiated, causing energy stored in the capacitor bank to be delivered to the solenoid of the safety lock.

At 1208, a discharge timer is initiated. The discharge timer can be set to expire after a predefined time has elapsed, where the predefined time generally corresponds to an estimated time required for the locking mechanism to travel from the first position to the second position. At 1210, a determination is made regarding whether the discharge timer has expired. If the discharge timer has not expired (NO at step 1210), the methodology continues monitoring to determine when the timer expires. If it is determined that the discharge timer has expired (YES at 1210), the discharging of the capacitor bank is halted at step 1212 *(e.g.,* by electrically isolating the capacitor bank from the solenoid). At 1214, the capacitor bank is recharged using power delivered by the power supply line.

Embodiments, systems, and components described herein, as well as industrial control systems and industrial automation environments in which various aspects set forth in the subject specification can be carried out, can include computer or network components such as servers, clients, programmable logic controllers (PLCs), automation controllers, communications modules, mobile computers, wireless components, control components and so forth which are capable of interacting across a network. Computers and servers include one or more processors-electronic integrated circuits that perform logic operations employing electric signals-configured to execute instructions stored in media such as random access memory (RAM), read only memory (ROM), a hard drives, as well as removable memory devices, which can include memory sticks, memory cards, flash drives, external hard drives, and so on.

Similarly, the term PLC or automation controller as used herein can include functionality that can be shared across multiple components, systems, and/or networks. As an example, one or more PLCs or automation controllers can communicate and cooperate with various network devices across the network. This can include substantially any type of control, communications module, computer, Input/Output (I/O) device, sensor, actuator, and human machine interface (HMI) that communicate *via* the network, which includes control, automation, and/or public networks. The PLC or automation controller can also communicate to and control various other devices such as I/O modules including analog, digital, programmed/intelligent I/O modules, other programmable controllers, communications modules, sensors, actuators, output devices, and the like.

The network can include public networks such as the internet, intranets, and automation networks such as control and information protocol (CIP) networks including DeviceNet, ControlNet, and Ethernet/IP. Other networks include Ethernet, DH/DH+, Remote I/O, Fieldbus, Modbus, Profibus, CAN, wireless networks, serial protocols, and so forth. In addition, the network devices can include various possibilities (hardware and/or software components). These include components such as switches with virtual local area network (VLAN) capability, LANs, WANs, proxies, gateways, routers, firewalls, virtual private network (VPN) devices, servers, clients, computers, configuration tools, monitoring tools, and/or other devices.

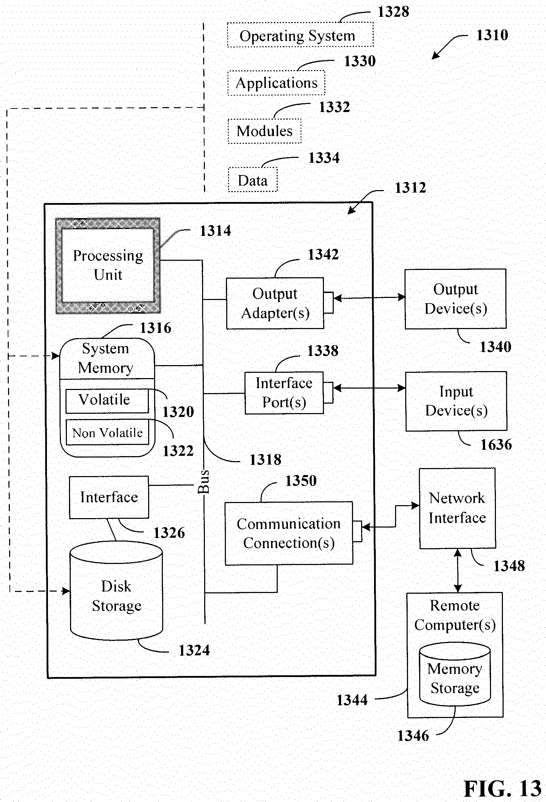

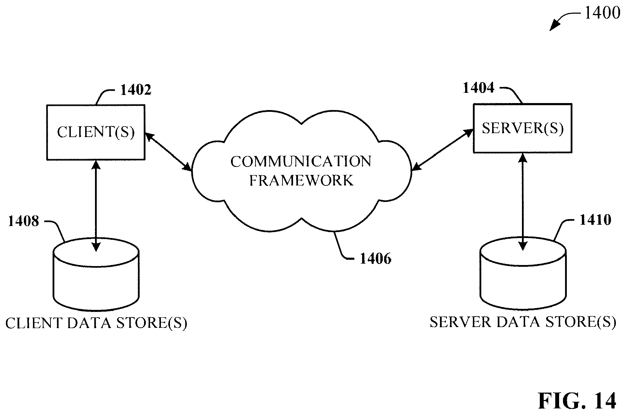

In order to provide a context for the various aspects of the disclosed subject matter, FIGs. 13 and 14 as well as the following discussion are intended to provide a brief, general description of a suitable environment in which the various aspects of the disclosed subject matter may be implemented.

With reference to FIG. 13, an example environment 1310 for implementing various aspects of the aforementioned subject matter includes a computer 1312. The computer 1312 includes a processing unit 1314, a system memory 1316, and a system bus 1318. The system bus 1318 couples system components including, but not limited to, the system memory 1316 to the processing unit 1314. The processing unit 1314 can be any of various available processors. Multi-core microprocessors and other multiprocessor architectures also can be employed as the processing unit 1314.

The system bus 1318 can be any of several types of bus structure(s) including the memory bus or memory controller, a peripheral bus or external bus, and/or a local bus using any variety of available bus architectures including, but not limited to, 8-bit bus, Industrial Standard Architecture (ISA), Micro-Channel Architecture (MSA), Extended ISA (EISA), Intelligent Drive Electronics (IDE), VESA Local Bus (VLB), Peripheral Component Interconnect (PCI), Universal Serial Bus (USB), Advanced Graphics Port (AGP), Personal Computer Memory Card International Association bus (PCMCIA), and Small Computer Systems Interface (SCSI).

The system memory 1316 includes volatile memory 1320 and nonvolatile memory 1322. The basic input/output system (BIOS), containing the basic routines to transfer information between elements within the computer 1312, such as during start-up, is stored in nonvolatile memory 1322. By way of illustration, and not limitation, nonvolatile memory 1322 can include read only memory (ROM), programmable ROM (PROM), electrically programmable ROM (EPROM), electrically erasable PROM (EEPROM), or flash memory. Volatile memory 1320 includes random access memory (RAM), which acts as external cache memory. By way of illustration and not limitation, RAM is available in many forms such as synchronous RAM (SRAM), dynamic RAM (DRAM), synchronous DRAM (SDRAM), double data rate SDRAM (DDR SDRAM), enhanced SDRAM (ESDRAM), Synchlink DRAM (SLDRAM), and direct Rambus RAM (DRRAM).

Computer 1312 also includes removable/non-removable, volatile/nonvolatile computer storage media. FIG. 13 illustrates, for example a disk storage 1324. Disk storage 1324 includes, but is not limited to, devices like a magnetic disk drive, floppy disk drive, tape drive, Jaz drive, Zip drive, LS-100 drive, flash memory card, or memory stick. In addition, disk storage 1324 can include storage media separately or in combination with other storage media including, but not limited to, an optical disk drive such as a compact disk ROM device (CD-ROM), CD recordable drive (CD-R Drive), CD rewritable drive (CD-RW Drive) or a digital versatile disk ROM drive (DVD-ROM). To facilitate connection of the disk storage 1324 to the system bus 1318, a removable or non-removable interface is typically used such as interface 1326.

It is to be appreciated that FIG. 13 describes software that acts as an intermediary between users and the basic computer resources described in suitable operating environment 1310. Such software includes an operating system 1328. Operating system 1328, which can be stored on disk storage 1324, acts to control and allocate resources of the computer 1312. System applications 1330 take advantage of the management of resources by operating system 1328 through program modules 1332 and program data 1334 stored either in system memory 1316 or on disk storage 1324. It is to be appreciated that one or more embodiments of the subject disclosure can be implemented with various operating systems or combinations of operating systems.

A user enters commands or information into the computer 1312 through input device(s) 1336. Input devices 1336 include, but are not limited to, a pointing device such as a mouse, trackball, stylus, touch pad, keyboard, microphone, joystick, game pad, satellite dish, scanner, TV tuner card, digital camera, digital video camera, web camera, and the like. These and other input devices connect to the processing unit 1314 through the system bus 1318 *via* interface port(s) 1338. Interface port(s) 1338 include, for example, a serial port, a parallel port, a game port, and a universal serial bus (USB). Output device(s) 1340 use some of the same type of ports as input device(s) 1336. Thus, for example, a USB port may be used to provide input to computer 1312, and to output information from computer 1312 to an output device 1340. Output adapters 1342 are provided to illustrate that there are some output devices 1340 like monitors, speakers, and printers, among other output devices 1340, which require special adapters. The output adapters 1342 include, by way of illustration and not limitation, video and sound cards that provide a means of connection between the output device 1340 and the system bus 1318. It should be noted that other devices and/or systems of devices provide both input and output capabilities such as remote computer(s) 1344.

Computer 1312 can operate in a networked environment using logical connections to one or more remote computers, such as remote computer(s) 1344. The remote computer(s) 1344 can be a personal computer, a server, a router, a network PC, a workstation, a microprocessor based appliance, a peer device or other common network node and the like, and typically includes many or all of the elements described relative to computer 1312. For purposes of brevity, only a memory storage device 1346 is illustrated with remote computer(s) 1344. Remote computer(s) 1344 is logically connected to computer 1312 through a network interface 1348 and then physically connected *via* communication connection 1350. Network interface 1348 encompasses communication networks such as local-area networks (LAN) and wide-area networks (WAN). LAN technologies include Fiber Distributed Data Interface (FDDI), Copper Distributed Data Interface (CDDI), Ethernet/IEEE 802.3, Token Ring/IEEE 802.5 and the like. WAN technologies include, but are not limited to, point-to-point links, circuit switching networks like Integrated Services Digital Networks (ISDN) and variations thereon, packet switching networks, and Digital Subscriber Lines (DSL).

Communication connection(s) 1350 refers to the hardware/software employed to connect the network interface 1348 to the system bus 1318. While communication connection 1350 is shown for illustrative clarity inside computer 1312, it can also be external to computer 1312. The hardware/software necessary for connection to the network interface 1348 includes, for exemplary purposes only, internal and external technologies such as, modems including regular telephone grade modems, cable modems and DSL modems, ISDN adapters, and Ethernet cards.

FIG. 14 is a schematic block diagram of a sample computing environment 1400 with which the disclosed subject matter can interact. The sample computing environment 1400 includes one or more client(s) 1402. The client(s) 1402 can be hardware and/or software (*e.g*., threads, processes, computing devices). The sample computing environment 1400 also includes one or more server(s) 1404. The server(s) 1404 can also be hardware and/or software (*e.g*., threads, processes, computing devices). The servers 1404 can house threads to perform transformations by employing one or more embodiments as described herein, for example. One possible communication between a client 1402 and servers 1404 can be in the form of a data packet adapted to be transmitted between two or more computer processes. The sample computing environment 1400 includes a communication framework 1406 that can be employed to facilitate communications between the client(s) 1402 and the server(s) 1404. The client(s) 1402 are operably connected to one or more client data store(s) 1408 that can be employed to store information local to the client(s) 1402. Similarly, the server(s) 1404 are operably connected to one or more server data store(s) 1410 that can be employed to store information local to the servers 1404.

In particular and in regard to the various functions performed by the above described components, devices, circuits, systems and the like, the terms (including a reference to a "means") used to describe such components are intended to correspond, unless otherwise indicated, to any component which performs the specified function of the described component (*e.g*., a functional equivalent), even though not structurally equivalent to the disclosed structure, which performs the function in the herein illustrated exemplary aspects of the disclosed subject matter. In this regard, it will also be recognized that the disclosed subject matter includes a system as well as a computer-readable medium having computer-executable instructions for performing the acts and/or events of the various methods of the disclosed subject matter.

Furthermore, to the extent that the terms "includes," and "including" and variants thereof are used in either the detailed description or the claims, these terms are intended to be inclusive in a manner similar to the term "comprising."

In this application, the word "exemplary" is used to mean serving as an example, instance, or illustration. Any aspect or design described herein as "exemplary" is not necessarily to be construed as preferred or advantageous over other aspects or designs. Rather, use of the word exemplary is intended to present concepts in a concrete fashion.

Various aspects or features described herein may be implemented as a method, apparatus, or article of manufacture using standard programming and/or engineering techniques. The term "article of manufacture" as used herein is intended to encompass a computer program accessible from any computer-readable device, carrier, or media. For example, computer readable media can include but are not limited to magnetic storage devices (*e.g*., hard disk, floppy disk, magnetic strips...), optical disks [*e.g.*, compact disk (CD), digital versatile disk (DVD)...], smart cards, and flash memory devices (*e.g.*, card, stick, key drive...).

## Claims

1. A locking system, comprising:
a solenoid (306);
a locking mechanism (100) configured to actuate in response to an electrical current being applied to the solenoid;
a capacitor bank (502) configured to discharge stored energy to the solenoid;
a discharge controller (508) configured to control a discharge of the stored energy to the solenoid, wherein the discharge controller is further configured to initiate a discharging of the stored energy to the solenoid in response to a command to transition the locking mechanism from a first position to a second position; **characterised in that** the locking system comprises
a discharge timer component (804), wherein the discharge controller is configured to initiate the discharge timer component in response to the command to transition the locking mechanism from the first position to the second position, and to stop the discharging of the stored energy to the solenoid in response to an indication from the discharge timer component (804) that a defined time duration has elapsed since initiation of the discharge timer.

2. The locking system of claim 1, wherein the locking mechanism comprises at least one of a plunger, an armature, or a locking bolt.

3. The locking system of claim 1, wherein the discharge controller is further configured to stop the discharging of the stored energy to the solenoid in response to receipt of a signal indicating that the locking mechanism has completed transition to the second position.

4. The locking system of claim 1, wherein the defined time duration corresponds or substantially corresponds to a time required for the locking mechanism to transition from the first position to the second position.

5. The locking system of any one of claims 1 to 4, further comprising at least one permanent magnet (308A, 308B) configured to magnetically latch the locking mechanism in a retracted position and an extended position.

6. The locking system of any one of claims 1 to 5, further comprising a voltage increasing component configured to increase a voltage, relative to a supply line (116) voltage, of an energy pulse that results from discharging the stored energy; or
further comprising a polarity control component (506) configured to control a polarity of the stored energy delivered to the solenoid.

7. The locking system of claim 1, wherein the discharge controller is further configured to initiate the discharge of the stored energy to the solenoid in response to a determination that a voltage on a power supply line has fallen below a defined voltage and that the locking mechanism is not in a defined default position.

8. A method for operating a safety lock (100), comprising:
receiving (1204) a command to transition a locking mechanism of the safety lock from a first position to a second position, wherein the locking mechanism is driven by a solenoid;
initiating (1206) a discharge of energy stored in a capacitor bank to the solenoid in response to the receiving; and
halting (1212) the discharge of the energy in response to a determination that a defined duration has elapsed since the initiating.

9. The method of claim 8, further comprising halting (1110) the discharge of the energy in response to receiving an indication that the locking mechanism has transitioned to the second position; or
wherein the defined duration corresponds or substantially corresponds to a time required for the locking mechanism to transition from the first position to the second position.

10. The method of claim 8 or 9, further comprising latching the locking mechanism in the second position using at least one of a magnet or a spring.

11. The method of any one of claims 8 to 9, further comprising:
monitoring a voltage of a power supply line that provides power to the capacitor bank; and
initiating the discharge of the energy stored in the capacitor bank to the solenoid in response to a determination that the voltage has dropped below a defined voltage level.

## Patentansprüche

1. Verschlusssystem, das umfasst:
eine Magnetspule (306);
einen Verschlussmechanismus (100),
der konfiguriert ist, um in Reaktion auf einen elektrischen Strom auszulösen, der der Magnetspule zugeführt wird;
eine Kondensatorbank (502), die konfiguriert ist, um eine gespeicherte Energie zur Magnetspule zu entladen;
eine Entladungssteuereinrichtung (508), die konfiguriert ist, um eine Entladung der gespeicherten Energie zur Magnetspule zu steuern, wobei die Entladungssteuereinrichtung des Weiteren konfiguriert ist, um eine Entladung der gespeicherten Energie zur Magnetspule in Reaktion auf einen Befehl einzuleiten, dass der Verschlussmechanismus von einer ersten Position zu einer zweiten Position übergeht;
**dadurch gekennzeichnet, dass**
das Verschlusssystem
eine Entladungs-Schaltuhrkomponente (804) umfasst, wobei die Entladungssteuereinrichtung konfiguriert ist, um die Entladungs-Schaltuhrkomponente in Reaktion auf den Befehl zum Übergang des Verschlussmechanismus von der ersten Position zur zweiten Position zu starten und die Entladung der gespeicherten Energie zur Magnetspule in Reaktion auf eine Anzeige von der Entladungs-Schaltuhrkomponente (804) zu stoppen, dass eine definierte Zeitdauer seit dem Starten der Entladungsschaltuhr abgelaufen ist.

2. Verschlusssystem nach Anspruch 1, wobei der Verschlussmechanismus wenigstens einen Stößel, einen Anker oder einen Verschlussbolzen umfasst.

3. Verschlusssystem nach Anspruch 1, wobei die Entladungssteuereinrichtung des Weiteren konfiguriert ist, um die Entladung der gespeicherten Energie zur Magnetspule in Reaktion auf den Empfang eines Signals zu stoppen, das anzeigt, dass der Verschlussmechanismus den Übergang zur zweiten Position abgeschlossen hat.

4. Verschlusssystem nach Anspruch 1, wobei die definierte Zeitdauer einer Zeit entspricht oder im Wesentlichen entspricht, die für den Verschlussmechanismus erforderlich ist, um von der ersten Position zur zweiten Position überzugehen.

5. Verschlusssystem nach einem der Ansprüche 1 bis 4, das des Weiteren wenigstens einen Dauermagneten (308A, 308B) umfasst, der konfiguriert ist, um den Verschlussmechanismus in einer zurückgezogenen Position und in einer ausgefahrenen Position magnetisch zu verriegeln.

6. Verschlusssystem nach einem der Ansprüche 1 bis 5, das des Weiteren eine Spannung erhöhende Komponente umfasst, die konfiguriert ist, um eine Spannung relativ zu einer Versorgungsleitungsspannung (116) eines Energieimpulses zu erhöhen, der von der Entladung der gespeicherten Energie herrührt; oder
des Weiteren eine Polaritäts-Steuerkomponente (506) umfasst, die konfiguriert ist, um eine Polarität der gespeicherten Energie zu steuern, die der Magnetspule zugeführt wird.

7. Verschlusssystem nach Anspruch 1, wobei die Entladungssteuereinrichtung des Weiteren konfiguriert ist, um die Entladung der gespeicherten Energie zur Magnetspule in Reaktion auf eine Feststellung zu starten, dass eine Spannung an einer Stromversorgungsleitung unter eine definierte Spannung gefallen ist und dass sich der Verschlussmechanismus nicht in einer definierten Standardposition befindet.

8. Verfahren zum Betätigen eines Sicherheitsschlosses (100), das umfasst:
Empfangen (1204) eines Befehls zum Übergang eines Verschlussmechanismus des Sicherheitsschlosses von einer ersten Position zu einer zweiten Position, wobei der Verschlussmechanismus durch eine Magnetspule angetrieben wird;
Starten (1206) einer Entladung von in einer Kondensatorbank gespeicherter Energie zur Magnetspule in Reaktion auf das Empfangen; und
Anhalten (1212) der Entladung der Energie in Reaktion auf eine Feststellung, dass eine definierte Dauer seit dem Starten abgelaufen ist.

9. Verfahren nach Anspruch 8, das des Weiteren das Anhalten (1110) der Entladung der Energie in Reaktion auf den Empfang einer Anzeige umfasst, dass der Verschlussmechanismus zur zweiten Position übergegangen ist; oder
wobei die definierte Dauer einer Zeit entspricht oder im Wesentlichen entspricht, die für den Verschlussmechanismus erforderlich ist, um von der ersten Position zur zweiten Position überzugehen.

10. Verfahren nach Anspruch 8 oder 9, das des Weiteren die Verriegelung des Verschlussmechanismus in der zweiten Position unter Verwendung wenigstens eines Magneten oder einer Feder umfasst.

11. Verfahren nach einem der Ansprüche 8 bis 9, das des Weiteren umfasst:
Überwachung einer Spannung einer Stromversorgungsleitung, die der Kondensatorbank Energie bereitstellt; und
Starten der Entladung der in der Kondensatorbank gespeicherten Energie zur Magnetspule in Reaktion auf eine Feststellung, dass die Spannung unter einen definierten Spannungspegel gefallen ist.

## Revendications

1. Système de verrouillage, comprenant :
un solénoïde (306) ;
un mécanisme de verrouillage (100) configuré pour se déclencher en réponse à un courant électrique appliqué au solénoïde ;
une batterie de condensateurs (502) configurée pour décharger de l'énergie emmagasinée à destination du solénoïde ;
une commande de déchargement (508) configurée pour commander un déchargement de l'énergie emmagasinée à destination du solénoïde, où la commande de déchargement est en outre configurée pour initier un déchargement de l'énergie emmagasinée à destination du solénoïde en réponse à une commande pour faire passer le mécanisme de verrouillage d'une première position à une seconde position ; **caractérisé en ce que** le système de verrouillage comprend un composant à chronomètre de déchargement (804), où la commande de déchargement est configurée pour démarrer le composant à chronomètre de déchargement en réponse à la commande pour faire passer le mécanisme de verrouillage de la première position à la seconde position, et pour arrêter la décharge de l'énergie emmagasinée à destination du solénoïde en réponse à une indication provenant du composant à chronomètre de déchargement indiquant qu'une période de temps définie s'est écoulé depuis le démarrage du chronomètre de déchargement.

2. Système de verrouillage selon la revendication 1, où le mécanisme de verrouillage comprend au moins un des éléments parmi un piston, une armature ou un verrou.

3. Système de verrouillage selon la revendication 1, où la commande de décharge est en outre configurée pour arrêter le déchargement de l'énergie emmagasinée à destination du solénoïde en réponse à la réception d'un signal indiquant que le mécanisme de verrouillage a achevé sa transition vers la seconde position.

4. Système de verrouillage selon la revendication 1, où la période de temps définie correspond ou correspond substantiellement à un temps nécessaire au mécanisme de verrouillage pour passer de la première position à la seconde position.

5. Système de verrouillage selon l'une quelconque des revendications 1 à 4, comprenant en outre au moins un aimant permanent (308A, 308B) conçu pour verrouiller magnétiquement le mécanisme de verrouillage dans une position rétractée ou déployée.

6. Système de verrouillage selon l'une quelconque des revendications 1 à 5, comprenant en outre un composant d'augmentation de la tension conçu pour augmenter une tension d'une impulsion d'énergie résultant du déchargement de l'énergie emmagasinée, par rapport à une tension de câble d'alimentation (116) ; ou
comprenant en outre un composant de contrôle de polarité (506) conçu pour contrôler la polarité de l'énergie emmagasinée fournie au solénoïde.

7. Système de verrouillage selon la revendication 1, où la commande de déchargement est en outre configurée pour démarrer le déchargement de l'énergie emmagasinée à destination du solénoïde lorsqu'il est déterminé qu'une tension d'un câble d'alimentation est tombée en dessous une tension définie et que le mécanisme de verrouillage n'est pas dans une position par défaut définie.

8. Procédé pour faire fonctionner un verrou de sécurité, comprenant les étapes consistant à :
recevoir (1204) une commande pour faire passer un mécanisme de verrouillage du verrou de sécurité d'une première position à une seconde position, où le mécanisme de verrouillage est actionné par un solénoïde ;
initier un déchargement (1206) d'énergie emmagasinée dans une batterie de condensateurs à destination du solénoïde en réponse à la réception de la commande ; et
arrêter (1212) le déchargement de l'énergie lorsqu'il est déterminé qu'une période de temps définie depuis l'initiation du déchargement s'est écoulée.

9. Procédé selon la revendication 8, comprenant en outre l'arrêt (1110) du déchargement de l'énergie en réponse à la réception d'une indication indiquant que le mécanisme de verrouillage est passé à la seconde position ; ou
où la période de temps définie correspond ou correspond substantiellement à un temps nécessaire au mécanisme de verrouillage pour passer de la première position à la seconde position.

10. Procédé selon la revendication 8 ou 9, comprenant en outre le verrouillage du mécanisme de verrouillage dans la seconde position en utilisant au moins un aimant ou un ressort.

11. Procédé selon l'une quelconque des revendications 8 à 9, comprenant en outre :
la surveillance d'une tension d'un câble d'alimentation qui fourni de l'énergie électrique à la batterie de condensateurs ; et
l'initiation du déchargement de l'énergie emmagasinée dans la batterie de condensateurs à destination du solénoïde lorsqu'il est déterminé que la tension est tombée en dessous d'un niveau de tension défini.
